# EUROPEAN PATENT SPECIFICATION

(11) **EP 2 216 959 B1**
(45) Date of publication and mention of the grant of the patent: **03.04.2019**
(21) Application number: 09382017.3
(22) Date of filing: 04.02.2009
(51) Int. Cl.: H04L 29/06, H04L 29/08

(54) **VIRTUAL CUSTOMER PREMISES EQUIPMENT**
Virtuelles Teilnehmergerät
Équipement virtuel de site client

(43) Date of publication of application: 11.08.2010
(73) Proprietor: Alcatel Lucent, 91620 Nozay (FR)
(72) Inventor: Villegas Nuñez, Alvaro, 28045, Madrid (ES); Martin Vila, José Jéronimo, 28045, Madrid (ES)
(74) Representative: Nokia EPO representatives

(56) References cited:
- US-A1- 2003 041 106
- US-A1- 2006 209 857
- US-A1- 2008 126 510

## Description

### PURPOSE OF THE INVENTION

This innovation generally refers to a device installed on the client side of a multimedia content provider, such as an IPTV Internet protocol digital TV service.

### STATE-OF-THE-ART

Multimedia services on IP networks, such as television broadcasting and video-on-demand VoD are delivered from a multimedia broadcasting server or television header to a large number of end user machines, i.e. client premises equipment CPE, such as a TV decoder interface, a set-top box STB, which is connected to a display screen that shows the images associated with the multimedia content broadcast over a broadband network, such as an IP network.

An individual client-subscriber selects the multimedia content using an external selection unit, such as a remote control unit, which generates and transmits a control signal to an input unit or interface that is remote from the local CPE.

When the control signal has been received, the remote interface generates and sends a signal corresponding to the signal received to a CPE processing unit which, in turn, generates and sends a signal to an application function device such as a machine that offers applications and is located on the same CPE to send the corresponding request for multimedia content to the multimedia server for the type of media, such as video, audio, etc., or to the network.

The application device located on the client machine includes a number of software modules that implement the protocols required by the applications defined by the media services provider, such as an HTML browser, a Flash player or a Java virtual machine, etc.

The client machine application device generates and transmits a decoding signal to a decoder module on the CPE to decode the signal associated with the selection made and generate at the output images associated with the selected audio/video content, included in the multimedia data stream (audio, video, etc), delivered from the content server on a communication channel on the IP network and received on the local CPE through an input/output unit or network interface module.

When the decoder has generated a decoded output signal, the images generated are sent to the TV screen to be viewed by the individual client.

The different application units of the application device generate a graphic user interface GUI, which is composed, rendered and blended with the decoded video image by overlay and/or transparency using application device process control, i.e. by the various CPE application units.

From the media service operator's point of view, the said CPE represents a hindrance for the said operator. Each time a client subscribes to a service offered by the operator, a specific CPE or STB decoder interface for the service that has been subscribed must be installed in the new subscriber's home.

In short, over time, the operator has a large number of STB/CPE interfaces installed in each of its subscribers' homes, which may have been supplied by various interface providers and, therefore, may correspond to different technologies.

When the operator wants to offer its subscribers a new service, it has to perform a detailed analysis of each individual client's profile to determine the STB/CPE each client has and whether or not it can support the new service the operator wants to offer.

Therefore, the decision to offer a new service that affects a group of clients-subscribers leads to the generation of a large number of orders that have to be executed individually for each affected client, generating an increase in the operator's workload.

For example, if any of the interfaces are not capable of supporting the new service, the operator has to begin a risky remote updating process for the interface software or, ultimately, send a worker to the corresponding subscriber's home, in which an interface is installed and whose technology has to be updated or substituted by an STB/CPE interface capable of operating with the new service the operator wants to offer its subscribers.

In short, all an operator's subscribers are not subscribed to the same services and therefore have no reason for having the same CPE installed and, consequently, they may be using different technologies. Accordingly, when the operator wants to increase the functionalities or services, etc. it offers its subscribers; it has to update the CPE that is not capable of providing the new services.

Therefore, the possibilities of providing new applications and services are limited by the technological capacity of the CPE installed in each individual subscriber's home, i.e. how to execute new applications on machines that are running out-of-date technology.

Furthermore, as the STB/CPE interface is located in the subscriber's home, its recovery is made very difficult if the subscriber unsubscribes from the service, with the resulting damages for the operator.

From the end user's point of view, in order to access multimedia services offered by different providers on his television, an independent local STB/CPE interface is generally required for each service.

The document US 2003/0041106 A1 disclosed a web server includes means to reduce the colour depth of the rendered virtual display, being this virtual display transmits as a compressed remote bitmap image to a client device to decompressed the received bitmap and show into a display screen.

### CHARACTERISATION OF THE INVENTION

This invention seeks to find a solution for or reduce one or more of the above drawbacks using a local virtual client device as claimed in claim 1. The features of the invention are established in the dependent claims.

One purpose of the invention is to provide a virtual customer premises equipment, virtual CPE that includes at least one application function module that executes an application protocol related to a multimedia content provision service, such as an HTML browser, a Flash player or a virtual Java machine, etc. requested by a subscriber from a multimedia content provider, such as video, audio or data, etc.

Another purpose of the invention is to supply a virtual CPE server to be located on a network node, such as an access network node.

Another purpose of the invention is to supply a thinner, smaller and simpler client premises equipment, thin CPE, with fewer functionalities in comparison with a specific machine in the corresponding technical field of the invention, since at least one of the application functionalities is supplied from the virtual CPE.

Another purpose of the invention is to supply a thin CPE that comprises a secondary real graphic client module that receives a data flow from a primary virtual graphic client module from the virtual CPE via a communications channel on a telecommunications network using a remote communication protocol so that the thin CPE can provide the end user with the same applications as those provided by a specific machine in the corresponding technical field of the invention from a multimedia content provider regardless of the manufacturer of the client premises equipment.

Another purpose of the invention is to allow the virtual CPE application function module to remotely control all the elements of the thin CPE, such as an audio/video decoding unit, an audio amplification unit, a front panel unit, A/V output units and local storage units, etc.

Another purpose of the invention is to send, continuously and in real-time from the virtual CPE application function modules, the graphic result of the execution of the corresponding applications to the thin CPE while the multimedia data flow continues to arrive directly from a video server or a television header to the thin CPE, where it is decoded. The decoded signal is mixed by overlay and/or transparency with the graphics sent from the virtual CPE to obtain an image that is the same as the image obtained on a specific machine in the corresponding technical field of the invention, such as an STB/CPE TV decoder interface, on the end user's display screen.

Another purpose of the invention is to update the application modules on the virtual CPE server machine continuously over time to allow the development and supply of value-added services gradually over time and space to the media content provider's subscribers.

Another purpose of the invention is to host a number of application function modules from different multimedia services providers on the virtual CPE server, with the consequent sharing of resources and cost reductions.

Another purpose of the invention is to provide the integration of the multimedia service client application modules using a single platform (the virtual CPE) as foundation for the said modules, with a standard operating system and software modules, not embedded, and with multiple development tools, avoiding dependence on multiple local CPE/STB machine providers with different development and integration environments.

Another purpose of the invention is to supply low-cost and small-size thin CPE equipment with reduced or zero update and maintenance to supply new functionalities and/or services.

Another purpose of the invention is to avoid, as far as possible, installation of new client premises equipment by making use of an existing local machine, such as a television decoder, a TV with an advanced user interface or a machine that is compatible with domestic network standards, such as DLNA.

Another purpose of the invention is to allow the end user to make use of one single STB/CPE platform to access multiple multimedia services offered by various providers with different client application technologies.

### BRIEF DESCRIPTION OF THE FIGURES

A more detailed explanation of the invention is given in the following description, based on the attached figures, which:
Figure 1 shows a IPTV system according to the invention,
Figure 2 shows an embodiment of a client premises equipment CPE according to the invention, and
Figure 3 shows an embodiment of a virtual CPE server according to the invention.

### DESCRIPTION OF THE INVENTION

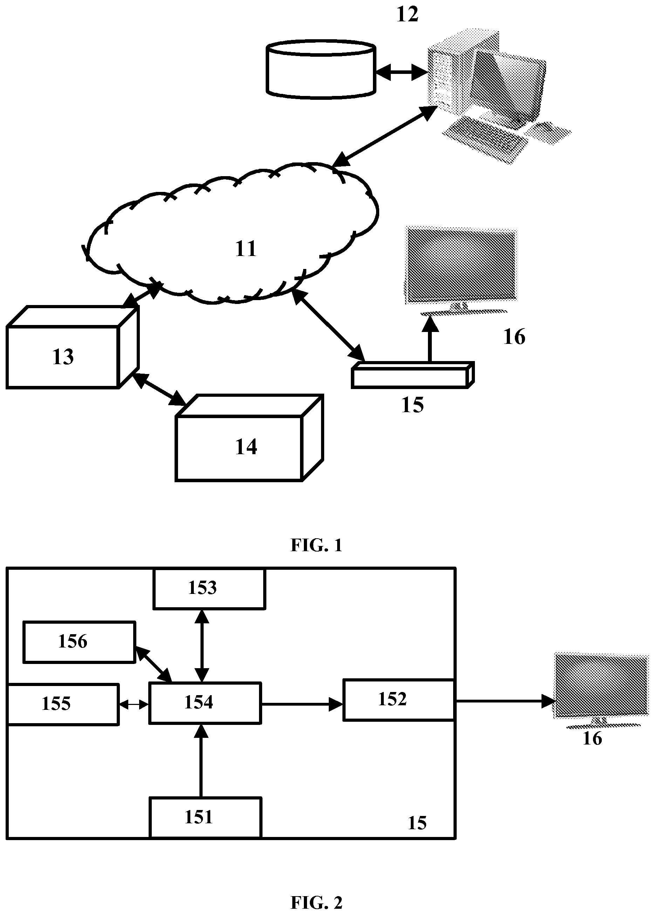

In relation to figure 1, a thin CPE client equipment 15 or terminal unit located on the subscriber side can be connected via a primary communications channel, supplied by a telecommunications network 11, to a virtual CPE server 14 located on a network node 13, such as an access network node, and to a multimedia content provider unit 12, such as a multimedia content server, a television header corresponding to a digital TV operator, such as IPTV Internet protocol television or a video server, etc. that generate and broadcast multimedia data flows to a large number of clients.

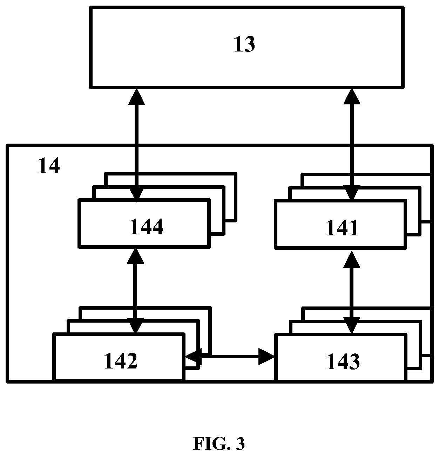

Now referring to the figures 2 and 3, the thin CPE equipment 15 comprises a primary remote interface 151 or input unit to receive a control signal transmitted from a remote control unit when one of the provider's individual users presses a key on an alphanumeric keyboard on the remote control. A secondary interface 152 or output unit for transmitting audio and video signals to be viewed by the end user on a display screen 16 such as a television; a tertiary network interface 153 or input/output unit to receive and transmit signals from and to the communications network via the primary communications channel; a decoding unit 156, such as an MPEG decoder or similar, to decode the multimedia data flows (data streaming), such as video and audio, etc., received via the communications channel and related to the multimedia content generated and broadcast from the multimedia services provider's header 12 or video servers to all the subscribers; a secondary real framebuffer-type graphic client module 155, which receives a data flow from a remote framebuffer server 144 on the virtual CPE server 14 through the tertiary interface 153 using a remote communication protocol, such as Remote Framebuffer Protocol (RFB protocol), to convert them into bitmaps in real time, where they are then rendered and blended with the video decoder output signal before they are displayed on the viewing screen 16 by the secondary interface 152; and an unit proxy 154 or intermediate module that interconnects the thin CPE equipment 15 described earlier to a control module 141 in the virtual CPE server 14 via a secondary communication channel on the IP network 11 and allows the said virtual CPE server 14 to monitor and control the operation of the thin client premises equipment 15, compared with a specific machine in the corresponding technical field of the invention, so that the image is sent and the application selected by the individual subscriber can be displayed on the television screen 16.

The proxy 154 in the client premises equipment 15 receives signals from a control module 141 located in the virtual CPE server 14 to control the operation of the thin CPE 15. Therefore, the proxy 154 is responsible for the remote control of the other elements of the local machine 15, such as the video and audio decoder, the video blender, the front panel, the volume and the remote control, etc.

The proxy 154 is also responsible for transmitting information data to the control module 141 in the virtual CPE server 14 captured locally on the thin client premises equipment 15 in relation to the operation of the other elements of the equipment and presently known by an expert in client premises equipment.

The communications protocol used between the proxy 154 and the control module 141 in the virtual CPE server 14 can be an operator's proprietary communications protocol, in accordance with the OSI model, providing services and applications to all its subscribers.

In short, from a subscriber's point of view, the thin CPE machine 15 installed in his home carries out the functions of client premises equipment such as one that is specific to the corresponding technical field of the invention.

However, the intelligence and applications of the thin CPE 15 are executed mainly on at least one application function module 143 included on the virtual CPE server 14 located on the access network side, e.g. on a node 13 of the same proximity to the subscribers to minimise possible delays or latency that could be generated when a proxy 154 and a remote framebuffer server 144 are introduced that interconnect the virtual CPE server 14, where most of the applications and services are executed, with the thin client premises equipment 15, which decodes the video and audio data received from the television header or video server and also blends the decoded signals and graphic bitmap images received in relation to the applications and services executed on the virtual CPE server 14.

In accordance with the foregoing, the virtual CPE server 14 is located, for example, on an access node 13, on a telephone exchange that provides subscribers with access to digital subscriber line services (DSL), such as a digital subscriber line access multiplexer (DSLAM). Therefore, the virtual CPE server that belongs to the provider-operator is located near its subscribers.

The virtual CPE server 14 can also be implemented on an added-value services card (service blade) located on the DSLAM access equipment.

The virtual CPE server 14 includes for each associated thin CPE device the first virtual 142 framebuffer-type graphic client module that represents each of the pixels on the individual client display screen in areas of a RAM memory, i.e. each and every one of the pixels that are to be displayed at any particular moment on the individual client screen 16 are stored in a portion of a memory unit on the virtual CPE server 14.

The virtual CPE server 14 also includes for each associated thin CPE device a remote framebuffer server element 144 that supervises and monitors the said virtual framebuffer 142 and sends the changes that occur to it via a channel on the communications network, using a framebuffer remotization protocol such as Remote Framebuffer Protocol (RFB).

The virtual CPE server 14 also includes for each associated thin CPE device a control module 141 or processing unit that monitors and controls the operation of the proxy 154 so that it sends and receives signals to and from the client premises equipment proxy 154, such as signals related to the operation of the keys on the remote control pressed by the subscriber when he changes channel, the control commands corresponding to the lights on the front panel, the volume control and the control of the video decoder, etc.

The virtual CPE server 14 also includes for each associated thin CPE device an application function device 143 (middleware), which comprises a number of modules for executing the applications related to the services the provider offers its subscribers. Each subscriber subscribes to the applications he prefers, which may use different technologies such as an HTML browser, Adobe Flash, GTK application, virtual Java machine, notifications service, WINDOWS applications and EPG information service, etc. Accordingly, each specific application module implements the protocol required to execute the client application selected by the subscriber, which requires as output device, a framebuffer graphic interface 142 so that the content of the virtual framebuffer on the virtual CPE server 14 is reflected on the real framebuffer 155 on the thin CPE 15. Therefore, the output signal for the selected application can be displayed in the TV screen 16.

It must be pointed out that, as an option, the thin client premises equipment 15 can be located directly in the viewing screen 16, since there will be no need for updating the corresponding HW/SW. The operator will carry out the corresponding updates directly on the virtual CPE server 14 located on the network side, i.e. on one of its own installations.

The provider can gradually deploy and/or update the currently installed client premises equipment 15 and install virtual CPE servers 14, maintaining certain local machines and/or STB interfaces indefinitely without the aforementioned functionalities, where it will not be necessary to interrupt the service provided at any time.

It must be pointed out that any writing to the RAM memory of the primary framebuffer 142 directly modifies, via the secondary framebuffer 155, the images viewed on the television screen 16. Accordingly, when the RAM memory of the primary framebuffer 142 is modified, the remote framebuffer server 144 generates and sends a signal containing the orders that are necessary to generate the corresponding bitmap in the secondary graphic module 155 so that the corresponding image is displayed on the viewing screen 16 after they have been blended by overlay and/or transparency with the video decoder output signals.

As already mentioned, the communication between the first 142 and second 155 framebuffer is carried out reliably by remote communications protocol (such as RFB protocol), guaranteeing a high level of reliability of the signals sent and received between both modules with a view to providing value-added services.

Furthermore, it guarantees the interoperability between the thin client premises equipment 15 and the corresponding virtual CPE servers 14 of the multimedia content providers.

Furthermore, it must be pointed out that this invention can be implemented in a variety of computer-readable media environments that comprise programmable computer-readable codes that include processing components, storage devices corresponding to a computer-readable storage system, including volatile and non-volatile memory system devices.

The software of the client premises equipment and the virtual CPE servers executes a variety of instructions or programmes that are applied to the information data and packages to carry out the aforementioned functions.

The programmes used by the aforementioned hardware modules can be implemented preferably in different programming languages.

Each computer programme is stored preferably in a module or storage device that can be read by a programmable computer of general or special use to configure and operate the computer when the storage device or module is read by the computer to execute the aforementioned procedures.

Consideration may also be given to the fact that the client premises equipment and the virtual CPE server can be implemented as a computer-readable module configured with a computer programme, which makes the computer operate in a previously specified and predefined way.

The description given here does not aim to be complete or limit the invention to the description given. Modifications and variations are possible in view of previous experience without straying from the scope of the following claims.

## Claims

1. **A client premises equipment, thin CPE,** adapted to receive a multimedia content data flow from a provider server (12) and a data flow using a remote communication protocol from a virtual customer premises equipment (14), virtual CPE, via a network node (13) and a telecommunications network (11); **characterised in that** the client premises equipment CPE (15) includes a secondary graphic client module (155) adapted to generate real time bitmap data corresponding to the data flow received from the virtual customer premises equipment (14); and a decoding module (156) adapted to decode the received multimedia content data flow, wherein the decoded signal is mixed with the bitmap data for supplying blended image to a display screen (16) by a secondary interface (152).

2. **The client premises equipment CPE** according to claim 1; wherein the client premises equipment CPE (15) comprising a proxy unit (154) can be interconnected with the virtual customer premises equipment (14), through a communication channel of an IP network (11); and a control module (141) monitors the operation of the client premises equipment CPE (15).

3. **The client premises equipment CPE** according to claim 1; wherein the virtual customer premises equipment CPE (14) comprises an application function module (143), connected to a first virtual (142) graphic client module, that supplies the data flow using the remote communication protocol to the client premises equipment CPE (15).

4. The **client premises equipment CPE** according to claim 3; wherein the customer premises equipment CPE (14) comprises a control module (141) monitors and controls the operation of a client premises equipment proxy unit (154), included in the client premises equipment (15).

5. The **client premises equipment CPE** according to claim 3; wherein the first virtual graphic client module (142) is of the kind virtual framebuffer type directly modifies the images viewed on a display screen (16) by means of the secondary real graphic client module (155) located on the thin client (15).

6. The **client premises equipment CPE** according to claim 3; wherein the remote communication protocol used by the first virtual graphic client module (142) is a a remote frame buffer protocol, to communicate with the secondary real graphic client module (155).

7. The **client premises equipment CPE** according to claim 1; wherein the virtual CPE (14) can communicate with the thin CPE proxy unit (154) by a communication protocol in accordance with the OSI model.

8. The **client premises equipment CPE** according to any of the foregoing claims; wherein the virtual CPE (14) can be connected to an access network node.

9. The **client premises equipment CPE** according to claim 8, wherein the virtual CPE (14) can be placed into DSLAM access node comprising a service blade.

10. **Display screen** can be connected to a multimedia content provider server (12) and to a virtual customer premises equipment (14), virtual CPE, via a network node (13) and a telecommunications network (11); **characterised in that** the display screen (16) includes a thin client premises equipment (15) according to claim 1.

## Patentansprüche

1. **Kundenstandortgerät, Thin-CPE,** das ausgelegt ist zum Empfangen eines Multimediainhalt-Datenflusses von einem Anbieterserver (12) und eines Datenflusses unter Verwendung eines Fernkommunikationsprotokolls von einem virtuellen Kundenstandortgerät (14), virtuellen CPE, über einen Netzknoten (13) und ein Telekommunikationsnetz (11); **dadurch gekennzeichnet, dass** das Kundenstandortgerät CPE (15) ein sekundäres Grafik-Client-Modul (155), das ausgelegt ist zum Erzeugen von Echtzeit-Bitmap-Daten, die dem vom virtuellen Kundenstandortgerät (14) empfangenen Datenfluss entsprechen; und ein Decodierungsmodul (156), das ausgelegt ist zum Decodieren des empfangenen Multimediainhalt-Datenflusses, beinhaltet, wobei das decodierte Signal mit den Bitmap-Daten gemischt wird, um ein gemischtes Bild durch eine Sekundärschnittstelle (152) zu einem Anzeigebildschirm (16) zu liefern.

2. **Kundenstandortgerät CPE** nach Anspruch 1; wobei das Kundenstandortgerät CPE (15), das eine Proxy-Einheit (154) umfasst, über einen Kommunikationskanal eines IP-Netzes (11) mit dem virtuellen Kundenstandortgerät (14) verbunden werden kann, und ein Steuermodul (141) den Betrieb des Kundenstandortgeräts CPE (15) überwacht.

3. **Kundenstandortgerät CPE** nach Anspruch 1; wobei das Kundenstandortgerät CPE (14) ein Anwendungsfunktionsmodul (143) umfasst, das mit einem ersten virtuellen Grafik-Client-Modul (142) verbunden ist, das den Datenfluss unter Verwendung des Fernkommunikationsprotokolls zu dem Kundenstandortgerät CPE (15) liefert.

4. **Kundenstandortgerät CPE** nach Anspruch 3; wobei das Kundenstandortgerät CPE (14) ein Steuermodul (141) umfasst, das den Betrieb einer Kundenstandortgerät-Proxy-Einheit (154), die im Kundenstandortgerät CPE (15) enthalten ist, überwacht und steuert.

5. **Kundenstandortgerät CPE** nach Anspruch 3; wobei das erste virtuelle Grafik-Client-Modul (142) von der Art eines virtuellen Framebuffertyps ist und die Bilder, die auf einem Anzeigebildschirm (16) angesehen werden, mittels des sekundären realen Grafik-Client-Moduls (155), das sich auf dem Thin-Client (15) befindet, direkt modifiziert.

6. **Kundenstandortgerät CPE** nach Anspruch 3; wobei das Fernkommunikationsprotokoll, das durch das erste virtuelle Grafik-Client-Modul (142) verwendet wird, ein Fern-Framebuffer-Protokoll ist, um mit dem sekundären realen Grafik-Client-Modul (155) zu kommunizieren.

7. **Kundenstandortgerät CPE** nach Anspruch 1; wobei das virtuelle CPE (14) durch ein Kommunikationsprotokoll gemäß dem OSI-Modell mit der Thin-CPE-Proxy-Einheit (154) kommunizieren kann.

8. **Kundenstandortgerät CPE** nach einem der vorangegangenen Ansprüche; wobei das virtuelle CPE (14) mit einem Zugangsnetzknoten verbunden werden kann.

9. **Kundenstandortgerät CPE** nach Anspruch 8, wobei das virtuelle CPE (14) in einen DSLAM-Zugangsknoten platziert werden kann, der einen Dienst-Blade umfasst.

10. **Anzeigebildschirm,** der über einen Netzknoten (13) und ein Telekommunikationsnetz (11) mit einem Multimediainhalt-Anbieterserver (12) und mit einem virtuellen Kundenstandortgerät (14), virtuellen CPE, verbunden werden kann; **dadurch gekennzeichnet, dass** der Anzeigebildschirm (16) ein Thin-Kundenstandortgerät (15) nach Anspruch 1 beinhaltet.

## Revendications

1. **Équipement de local client, CPE (client premises equipment) léger,** conçu pour recevoir un flux de données de contenu multimédia provenant d'un serveur fournisseur (12) et un flux de données en utilisant un protocole de communication distant à partir d'un équipement de local client virtuel (14), d'un CPE virtuel, à travers un noeud de réseau (13) et un réseau de télécommunication (11) ; **caractérisé en ce que** l'équipement de local client CPE (15) comprend un module client graphique secondaire (155) conçu pour générer des données bitmap en temps réel correspondant au flux de données reçu de l'équipement de local client virtuel (14) ; et un module de décodage (156) conçu pour décoder le flux de données de contenu multimédia reçu, dans lequel le signal décodé est mélangé aux données bitmap pour fournir une image mixte à un écran d'affichage (16) par une interface secondaire (152).

2. **Équipement de local client, CPE,** selon la revendication 1 ; dans lequel l'équipement de local client CPE (15) comprenant une unité intermédiaire (154) peut être interconnecté à l'équipement de local client virtuel (14), par l'intermédiaire d'un canal de communication d'un réseau IP (11) ; et un module de commande (141) surveille le fonctionnement de l'équipement de local client CPE (15).

3. **Équipement de local client, CPE,** selon la revendication 1 ; dans lequel l'équipement de local client virtuel CPE (14) comprend un module de fonction d'application (143), connecté à un premier module client graphique virtuel (142), qui fournit le flux de données en utilisant le protocole de communication distant à l'équipement de local client CPE (15).

4. **Équipement de local client, CPE,** selon la revendication 3 ; dans lequel l'équipement de local client CPE (14) comprend un module de commande (141) qui surveille et commande le fonctionnement d'une unité intermédiaire (154) de l'équipement de local client, incluse dans l'équipement de local client (15).

5. **Équipement de local client, CPE,** selon la revendication 3 ; dans lequel le premier module client graphique virtuel (142) est du type tampon de trame virtuel et modifie directement les images présentées sur un écran d'affichage (16) au moyen du module client graphique réel secondaire (155) situé sur le client léger (15).

6. **Équipement de local client, CPE,** selon la revendication 3 ; dans lequel le protocole de communication distant utilisé par le premier module client graphique virtuel (142) est un protocole de mémoire tampon de trame distant, pour communiquer avec le module client graphique réel secondaire (155).

7. **Équipement de local client, CPE,** selon la revendication 1 ; dans lequel le CPE virtuel (14) peut communiquer avec l'unité intermédiaire de CPE léger (154) par un protocole de communication conforme au modèle OSI.

8. **Équipement de local client, CPE,** selon l'une quelconque des revendications précédentes ; dans lequel le CPE virtuel (14) peut être connecté à un noeud du réseau d'accès.

9. **Équipement de local client, CPE,** selon la revendication 8, dans lequel le CPE virtuel (14) peut être placé dans un noeud d'accès DSLAM comprenant une couche de service.

10. **Écran d'affichage** pouvant être connecté à un serveur de fournisseur de contenu multimédia (12) et à un équipement de local client virtuel (14), à un CPE virtuel, par un noeud du réseau (13) et un réseau de télécommunication (11) ; **caractérisé en ce que** l'écran d'affichage (16) comprend un équipement de local client léger (15) selon la revendication 1.
